# EUROPEAN PATENT SPECIFICATION

(11) **EP 2 484 634 B1**
(45) Date of publication and mention of the grant of the patent: **08.07.2015**
(21) Application number: 10820350.6
(22) Date of filing: 14.09.2010
(51) Int. Cl.: C01B 31/20, B01D 53/18

(54) **CARBON DIOXIDE GAS PROCESSING APPARATUS AND METHOD FOR PROCESSING CARBON DIOXIDE GAS**
VORRICHTUNG ZUR VERARBEITUNG VON KOHLENDIOXID UND VERFAHREN ZUR VERARBEITUNG VON KOHLENDIOXID
APPAREIL DE TRAITEMENT DE DIOXYDE DE CARBONE GAZEUX ET PROCÉDÉ DE TRAITEMENT DE DIOXYDE DE CARBONE GAZEUX

(30) Priority: 29.09.2009 JP 2009225238
(43) Date of publication of application: 08.08.2012
(73) Proprietor: Aisin Seiki Kabushiki Kaisha, Aichi 448-8650 (JP)
(72) Inventor: WAKIMOTO Yoshiki, Kariya-shi Aichi 448-8650 (JP); KOYAMA Toshiyuki, Kariya-shi Aichi 448-8650 (JP); MINAKI Hajime, Kariya-shi Aichi 448-8650 (JP); FUJII Satoshi, Kariya-shi Aichi 448-8650 (JP); HARADA Yoichi, Kariya-shi Aichi 448-8650 (JP)
(74) Representative: TBK
(86) International application number: PCT/JP2010/065829
(87) International publication number: WO 2011/040231

(56) References cited:
- EP-A1- 1 142 629
- JP-A- 7 265 688
- JP-A- 10 137 533
- JP-A- 2005 097 072
- JP-A- 2007 224 349
- JP-A- 2008 514 406
- DATABASE WPI Week 199604 Thomson Scientific, London, GB; AN 1996-032648 XP002713217, & JP H07 265688 A (AGENCY OF IND SCI & TECHNOLOGY) 17 October 1995 (1995-10-17)

## Description

### Technical Field

The present invention relates to a carbon dioxide gas processing method.

### Background Art

Conventionally, as a method of processing carbon dioxide gas, there is known a method comprising bringing a gas containing carbon dioxide gas into contact with a water solution obtained from water, an alkaline earth metal containing substance, and a salt of a weak base and a strong acid, thereby to produce a carbonate of the alkaline earth metal (see e.g. PTL 1). In this method, as the alkaline earth metal containing substance, there is employed a natural mineral, a waste material, a by-product discharged from a manufacturing process, etc.

In EP 1 142 629 A1 an exhaust gas containing CO₂ is blown into an agglomerate of solid particles containing CaO and/or Ca(OH)₂ to contact CO₂ to the agglomerate for fixing CO₂ in the exhaust gas as CaCO₃, thereby to reduce the CO₂ concentration in the exhaust gas. The solid particles may contain water as surface adhesive water.

### Citation List

### Patent Literature

PTL 1: Japanese Unexamined Patent Application Publication No. 2005-97072 gazette

### Summary of Invention

### Technical Problem

However, with the method described in PTL 1 above, as the method requires a step of extracting the alkaline earth metal substance from a natural mineral, a waste material, a by-product discharged from a manufacturing process, etc, hence, there was a problem of increase of processing cost.

The present invention has been made in view of the above-described problem and its object is to provide a carbon dioxide gas processing method that are capable of processing carbon dioxide gas inexpensively and easily.

### Solution to Problem

The present inventors took notice that magnesium, when combusted in a carbon dioxide gas atmosphere, is made into a magnesium oxide and discovered that powder of magnesium can be made usable as an alkaline earth metal for a carbon dioxide processing only by being oxidized in a gas containing oxygen as a constituent element thereof, e.g. a carbon dioxide gas atmosphere and arrived at the present invention based on this discovery.

According to the first characterizing feature of a carbon dioxide gas processing method relating to the present invention, the method comprises the steps of: oxidizing magnesium-containing powder in an atmosphere of a gas containing oxygen as a constituent element thereof, thereby to produce a magnesium oxide; adding the produced magnesium oxide to water or a water solution; and bringing carbon dioxide gas into contact with said water or said water solution, thereby to immobilize the carbon dioxide gas as magnesium carbonate.

With the above solution, magnesium oxide which has been produced by oxidizing magnesium-containing powder in the atmosphere of a gas such as carbon dioxide gas, that contains oxygen as a constituent element thereof, is added to water or a water solution to be brought into contact with carbon dioxide gas, whereby the carbon dioxide gas can be immobilized. Further, if carbon dioxide gas is employed as the gas containing oxygen as a constituent element in the oxidization process of the magnesium-containing powder, the carbon dioxide gas is consumed at this step also. Hence, the processing efficiency of carbon dioxide gas will be enhanced.

Therefore, according to the carbon dioxide gas processing method of the above solution, carbon dioxide gas can be processed inexpensively and easily.

According to the second characterizing feature of the carbon dioxide gas processing method relating to the present invention, at least one of the temperature, the magnesium ion concentration and the bicarbonate ion concentration of the water or the water solution is controlled to precipitate the magnesium carbonate.

With the above solution, by controlling at least one of the temperature, the magnesium ion concentration and the bicarbonate ion concentration of the water or the water solution, it becomes possible to select the kind of magnesium carbonate to be precipitated. Therefore, if e.g. selective precipitation is effected for normal magnesium carbonate having a high immobilization ratio of carbon dioxide gas relative to magnesium, the processing efficiency of carbon dioxide gas can be enhanced.

For accomplishing the object noted above, a carbon dioxide gas processing apparatus may be used in the method according to claim 1, the apparatus comprises: an oxidization vessel for producing a magnesium oxide by oxidizing magnesium-containing powder in an atmosphere of a gas that contains oxygen as a constituent element thereof; a carbonate production tank that reserves water or a water solution therein and that introduces the magnesium oxide produced in the oxidization vessel; and a carbon dioxide gas supplying means for supplying carbon dioxide gas to the carbonate production tank.

With this arrangement, by oxidizing the magnesium-containing powder, inside the oxidization vessel, in an atmosphere of a gas such as a carbon dioxide gas that contains oxygen as a constituent element thereof, magnesium oxide can be produced. Therefore, magnesium as an alkaline earth metal to be reacted with carbon dioxide gas can be readily supplied. Moreover, when carbon dioxide gas is employed as the gas containing oxygen as a constituent element thereof, the carbon dioxide gas can be consumed in the oxidization vessel, so that the efficiency of carbon dioxide gas processing can be enhanced.

### Brief Description of Drawings

[Fig. 1] is a schematic view of a carbon dioxide gas processing apparatus,
[Fig. 2] is a schematic view of a storage vessel for storing powder containing magnesium,
[Fig. 3] is a graph illustrating an example where magnesium carbonate is precipitated by controlling [Mg²⁺] [CO₃²⁻]/Ksp,
[Fig. 4] is a graph showing relationship among bicarbonate ion concentration, temperature and the kind of magnesium salt,
[Fig. 5] is a graph showing change over time of the concentration of carbon dioxide gas derived from solution and pH of the solution,
[Fig. 6] is a graph showing relationship between pH of the solution and the concentration of carbon dioxide gas derived from the solution,
[Fig. 7] is a graph showing the relationship among compounds, the ion solubility and pH,
[Fig. 8] is a graph showing relationship among the absorptivity of carbon dioxide gas in a liquid, the bicarbonate ion ratio and pH,
[Fig. 9] is a graph showing change over time of pH and electric conductivity,
[Fig. 10] is a graph showing change over time of pH and oxidization-reduction potential,
[Fig. 11] is a graph showing changes of latent period until precipitation of the magnesium carbonate and particle diameter of magnesium carbonate when [Mg²⁺]I[CO₃²⁻] is varied,
[Fig. 12] is a graph showing particle size distributions of a product and debris,
[Fig. 13] is a graph showing relationship between the temperature of solution and the kind of magnesium salt,
[Fig. 14] is a graph showing relationship among pH, temperature and the kind of magnesium salt,
[Fig. 15] is a graph showing relationship among a bicarbonate ion ratio, temperature and the kind of magnesium salt,
[Fig. 16] is a graph showing relationship between the water content percentage of magnesium-containing powder and combustion period,
[Fig. 17] is a graph showing change over time of combustion temperature, and
[Fig. 18] is a schematic view of an oxidization vessel relating to a further embodiment.

### Description of Embodiments

Next, a carbon dioxide gas processing apparatus used in the present invention will be described with reference to the accompanying drawings.

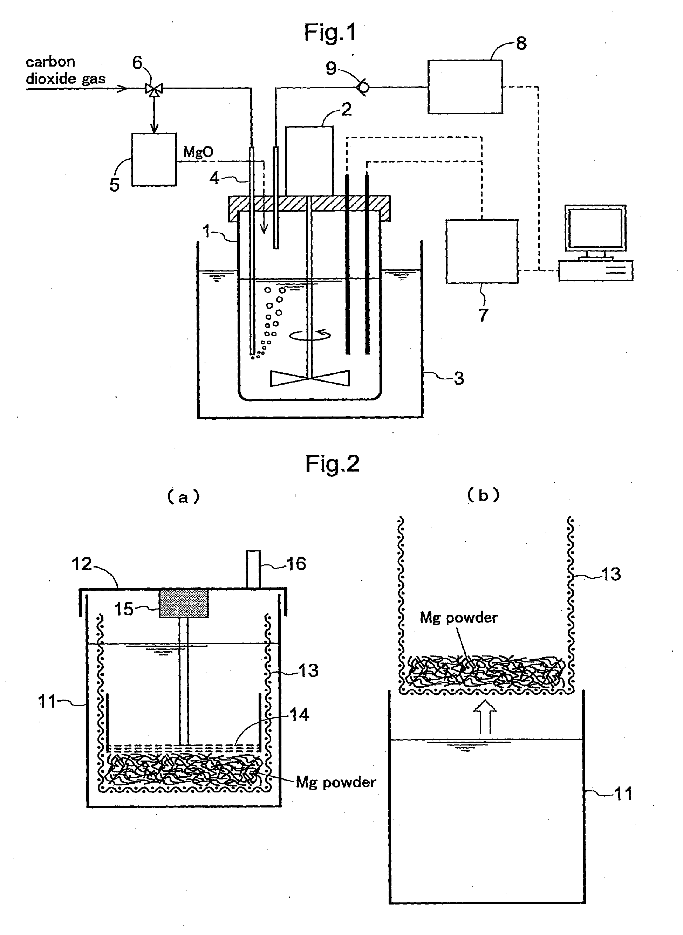

The carbon dioxide gas processing apparatus, as shown in Fig. 1, includes a carbonate production tank 1 reserving therein an amount of water or a water solution (may be referred to as "a water or the like" hereinafter), a nozzle 4 as a carbon dioxide gas supplying means for supplying an amount of carbon dioxide gas to the carbonate production tank 1 and an oxidization vessel 5 for oxidizing a magnesium-containing powder (may be referred to as "Mg powder" hereinafter) in an atmosphere containing oxygen as a constituent element thereof, thereby to produce magnesium oxide. Incidentally, since carbon dioxide gas is employed also as the gas containing oxygen as a constituent element thereof, a three-way valve 6 is provided in a supply passage of carbon dioxide gas, so that the destination of carbon dioxide gas supply can be switched over between the carbonate production tank 1 and the oxidization vessel 5.

The carbonate production tank 1 is not particularly limited as long as it is capable of reserving an amount of water or the like therein. For instance, a known vessel (container) or the like may be employed. The carbonate production tank 1 mounts therein a stirrer 2 for stirring the water or the like; a bath tank 3 for adjusting the temperature of the water or the like, a measurement instrument 7 for determining the temperature, pH, oxidization reduction potential (OPR), electric conductivity of the water or the like, and a gas chromatograph 8 for determining the concentration of un-reacted carbon dioxide gas flowing out of the carbonate production tank 1. Further, between the carbonate production tank 1 and the gas chromatograph 8, there is provided a backflow preventing device 9 for preventing backflow of carbon dioxide gas flown out of the carbonate production tank 1.

The oxidization vessel 5 includes a temperature adjusting means (not shown), so that the carbon dioxide gas may be set to a predetermined temperature for oxidizing the Mg powder. The oxidization vessel 5 is not particularly limited as long as it is capable of oxidizing the Mg powder in the carbon dioxide gas atmosphere. As some non-limiting examples thereof, carbon dioxide gas passing type or closed type vessels such as a heater, an autoclave, a drier, etc. that can be temperature-adjusted are cited.

Magnesium oxide produced in the oxidization vessel 5 is introduced into the carbonate production tank 1 by means of a magnesium introducing (charging) means (not shown). The magnesium introducing means is not particularly limited, and can be a continuous charging type, a butch charging type, etc. For example, a conventional device such as a belt conveyer can be used.

The carbon dioxide processing method using the carbon dioxide gas processing apparatus described above includes a step of producing magnesium oxide by oxidizing the Mg powder in the atmosphere of the gas containing oxygen as a constituent element thereof, such as carbon dioxide gas, a step of adding the produced magnesium oxide to water or a water solution, and a step of bringing carbon dioxide gas into contact with this water or a water solution, so that the carbon dioxide gas is immobilized as magnesium carbonate. With this method, by adding magnesium oxide produced by oxidizing Mg powder in the atmosphere of e.g. carbon dioxide gas to the water or the like to be brought into contact with carbon dioxide gas, the carbon dioxide gas can be readily immobilized as magnesium carbonate. Also, if carbon dioxide gas is employed also in oxidizing the Mg powder, an amount of carbon dioxide gas can be consumed at this step also, so that the carbon dioxide gas processing efficiency can be enhanced also. Therefore, carbon dioxide gas can be processed inexpensively and easily.

In the carbon dioxide gas processing method of the present invention, the order of the step of adding produced magnesium oxide to water or the like and the step of bringing carbon dioxide gas into contact with the water or the like is not particularly limited. For instance, in the case of effecting the step of adding magnesium oxide to water or the like first, with using acidic water solution, the magnesium oxide can be dissolved in the water solution as magnesium hydrate reacting with water. In the case of using neutral water, it is generally difficult to dissolve magnesium hydrate therein. However, as the acidity of the water is increased by contacting carbon dioxide gas with the water at the subsequent step, the magnesium hydrate will be dissolved, so that magnesium carbonate can be produced. Further, it is also possible to improve the solubility of magnesium hydrate by raising the water temperature.

In the case of effecting the step of contacting carbon dioxide gas with the water or the like first, the carbon dioxide gas may be contacted with neutral water, thereby to increase the acidity of the water. Therefore, when magnesium oxide is added at the subsequent step, it will be dissolved as magnesium hydrate, whereby magnesium carbonate is produced. Further, if a water solution obtained by mixing water with an alkaline absorption liquid such as monoethanolamine is employed and carbon dioxide gas is brought into contact therewith, the absorptivity of carbon dioxide gas to the water solution too can be enhanced.

The Mg powder for use in the present invention can be a powder of magnesium metal alone, a magnesium alloy, etc and is not particularly limited. But, as some non-limiting examples thereof, magnesium waste products such as cutting debris of a cylinder head cover, a magnesium wheel, etc. or a magnesium dross can be cited. By reusing such products as above that would be disposed of originally, the processing cost of carbon dioxide gas can be reduced advantageously.

The Mg powder has the risk of being combusted if contacting air during its storage. Conventionally, it is known to store Mg powder in water or the like. However, when Mg is stored in water or the like, this forms a local cell, thereby to generate hydrogen gas. For this reason, with lapse of a certain period in the storage, bubbles of hydrogen or the like will be generated and they will adhere about the particles of the Mg powder, which bubbles will cause the Mg powder to float on the liquid surface, so that the floating powder may be exposed to the air.

In such case as above, it is preferred that the Mg powder be stored in e.g. a storage vessel such as one shown in Fig. 2 (a). This storage vessel includes a storage vessel body 11 for holding therein a storage liquid such as water or cutting debris oil mixture liquid, and a lid member 12 for covering the storage vessel body 11. Inside the storage vessel body 11, there are provided an inner vessel 13 having a plurality of pores at least in its bottom and holding the Mg powder therein, and a drop-lid 14 for pressing the Mg powder held in the inner vessel 13 from above and preventing the Mg powder from floating to the liquid surface. The drop-lid 14 is configured to be fixable to the lid member 12 via a cushioning member 15 such as a sponge and the position of the drop-lid 14 is variable according to the amount of the Mg powder. Further, the drop-lid 14 defines a plurality of pores so that only bubbles desorbed from the surface of the Mg powder can pass through the drop-lid 14 to be discharged to the outside of the liquid. The lid member 12 includes a gas drainage mechanism 16 for preventing rising of the pressure inside the vessel due to discharged gas.

With using the storage vessel described above, it is possible to restrict floating of the Mg powder to the liquid surface and subsequent contact thereof with air. Further, when the Mg powder is to be removed from inside the liquid, as shown in Fig. 2 (b), the inner vessel 13 holding the powder therein will be pulled up from the storage vessel body 11, whereby the Mg powder can be easily removed without being left inadvertently in the storage vessel body 11. Further, when the inner vessel 13 has been lifted up off the liquid surface, the plurality of pores defined in the inner vessel 13 allow also removal of liquid adhering to the Mg powder.

As the storage vessel described above, if a storage vessel body 11 having the capacity of 100 ml is employed and 20g of Mg powder and 70g of water are charged therein and these are pressed from the above by the drop-lid 14 and then an ignition source is brought to the vicinity of the liquid surface, Mg powder particles smaller than the slits of the drop-lid 14 will float, but there will occur no combustion because the amount of water of its periphery is greater than that of the powder. In contrast, in accordance with the conventional art, with anticipation of occurrence of floating of Mg powder to the liquid surface, if 90 g of water is charged into the storage vessel and the Mg powder is allowed to float in distribution on the liquid surface and then the ignition source is brought to the vicinity of the Mg powder which is not in contact with the liquid surface, violent combustion will start and all of the amount of Mg powder floating on the liquid surface will be combusted. These events can be experimentally confirmed.

The gas containing oxygen as a constituent element for use in the present invention is not particularly limited, but carbon dioxide gas can be cited as a non-limiting example thereof. And, the carbon dioxide gas need not be pure carbon dioxide gas, but can be any gas containing carbon dioxide gas. For example, it is possible to employ a combustion exhaust gas which is generated by combustion of cutting powder or debris of magnesium alloy. In addition to the above, it is possible to employ as the carbon dioxide gas a combustion exhaust gas which is generated by combustion of a gas fuel such as liquefied natural gas (LNG), liquefied petroleum gas (LP), etc., a liquid fuel such as gasoline, gas oil, etc. and a solid fuel such as coal, etc. Incidentally, in case a combustion exhaust gas or the like is employed as the carbon dioxide gas, this may be caused to pass through an adsorption filter or the like before it is fed to the carbonate production tank 1 or the oxidization vessel 5, so as to remove dust or gas or the like other than the carbon dioxide gas.

The Mg powder is oxidized when brought into contact with the carbon dioxide gas or the like. Therefore, the temperature of the atmosphere of the carbon dioxide gas or the like can be a normal temperature (25±15°C, same applies to the following discussion also), and is not particularly limited. But, the higher the temperature, the easier the oxidization. For this reason, for instance, if a combustion exhaust gas or the like is supplied directly as the carbon dioxide gas, the Mg powder can be oxidized efficiently in the high temperature atmosphere. Further, in the oxidization vessel 5, the combustion rate of the Mg powder can be controlled by setting the temperature of the atmosphere of the carbon dioxide gas or the like to a predetermined temperature. Incidentally, when the Mg powder is combusted in the atmosphere of carbon dioxide gas or the like, magnesium hydrate may sometimes be produced due to reaction thereof with water contained in the carbon dioxide gas. However, when magnesium oxide per se too is charged into the carbonate production tank 1, the powder will react with water to be made into magnesium hydrate. Therefore, the product in the oxidization vessel 5 does not require additional treatment such as fractionation or the like and can be charged directly into the carbonate production tank 1.

The contacting of carbon dioxide gas with the water or the like in the carbonate production tank 1 can be done by any conventional method and is not particularly limited. In the instant embodiment, there was shown the exemplary arrangement in which the nozzle 4 is employed as a carbon dioxide gas supplying means for bubbling (blowing) the carbon dioxide gas into the water or the like. Alternatively, however, the contacting with each other can be made also by supplying the carbon dioxide gas into the carbonate production tank 1 with using a nozzle 4 or the like and sealing it together with the water or the like and then shaking them. Meanwhile, the water or the like in the carbonate production tank 1 can be used at any desired temperature.

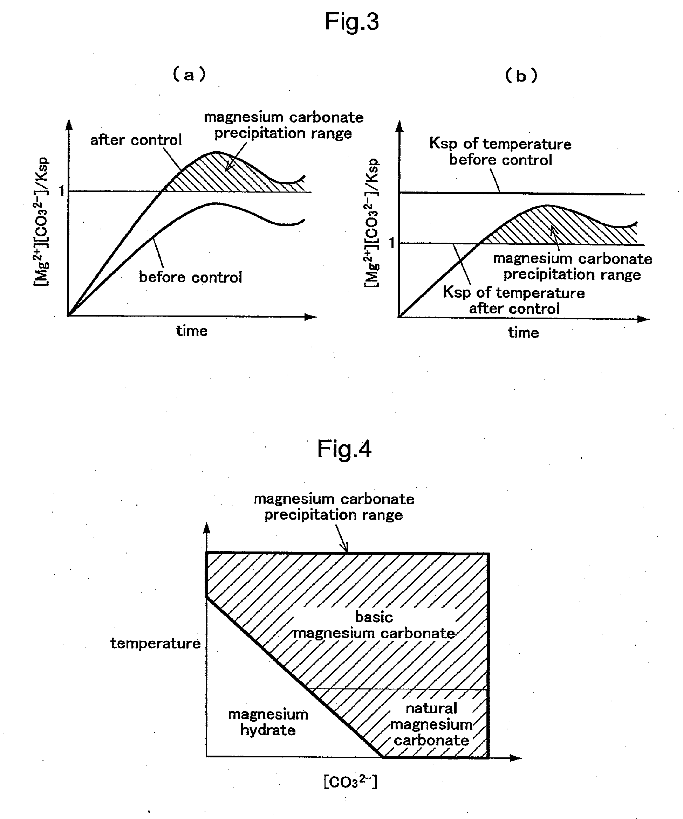

Preferably, in the carbonate production tank 1, at least one of the concentration of magnesium ion [Mg²⁺], the concentration of bicarbonate ion [CO₃²⁻] contained in the water or the like and the temperature of the water or the like is controlled. With this, it becomes possible to control precipitation of magnesium carbonate and the kind of magnesium carbonate. More particularly, magnesium carbonate will precipitate in the case of [Mg²⁺] [CO₃²⁻] > Ksp (solubility product). For this reason, as shown in Fig. 3 (a) for example, if [Mg²⁺] [CO₃²⁻] are controlled to be greater than Ksp, magnesium carbonate can be precipitated. Further, since Ksp depends on the temperature, as shown in Fig. 3 (b), in the case of Ksp > [Mg²⁺] [CO₃²⁻], no magnesium carbonate will be precipitated, but if the temperature is controlled to obtain the condition: (temperature-adjusted Ksp) < [Mg²⁺] [CO₃²⁻], magnesium carbonate can be precipitated.

Further, as the magnesium salt produced in the carbonate production tank 1, three kinds of them, namely, magnesium hydrate (Mg(OH)₂), basic magnesium carbonate (mMgCO₃·nMg (OH)₂·mH₂O), natural magnesium carbonate (MgCO₃·3H₂O), are conceivable. Of these, natural magnesium carbonate has a Mg/CO₂ stoichiometric proportion of 1 : 1, thus having the highest CO₂ immobilization ratio relative to Mg. Therefore, if natural magnesium carbonate can be selectively produced, the processing efficiency of carbon dioxide gas can be enhanced.

Natural magnesium carbonate can be selectively produced by controlling the magnesium ion concentration, the bicarbonate ion concentration, and the temperature. For example, if the concentration of magnesium ion is kept constant, then, the kind of product, the bicarbonate ion concentration and the temperature have a relationship shown in Fig. 4.

In the above control, the magnesium ion concentration can be determined continuously or at predetermined intervals, by EDTA chelatometric titration.

The bicarbonate ion concentration cannot be determined directly. In the case of a converted value from the absorption amount of carbon dioxide gas, there occurs a significant error since the value is inclusive of carbon dioxide gas which is not ionized and discharged to the outside. For this reason, the bicarbonate ion concentration is obtained by computing it from the carbon dioxide gas absorptivity in the liquid, the bicarbonate ion ratio (CO₃²⁻/CO₂), and pH.

Specifically, for example, to a solution adjusted to a desired pH by dissolving potassium hydrate (KOH) in 500 mol of water (pH7), 90 vol%N₂-10vol%CO₂ gas will be introduced at the rate of 1 Umin.

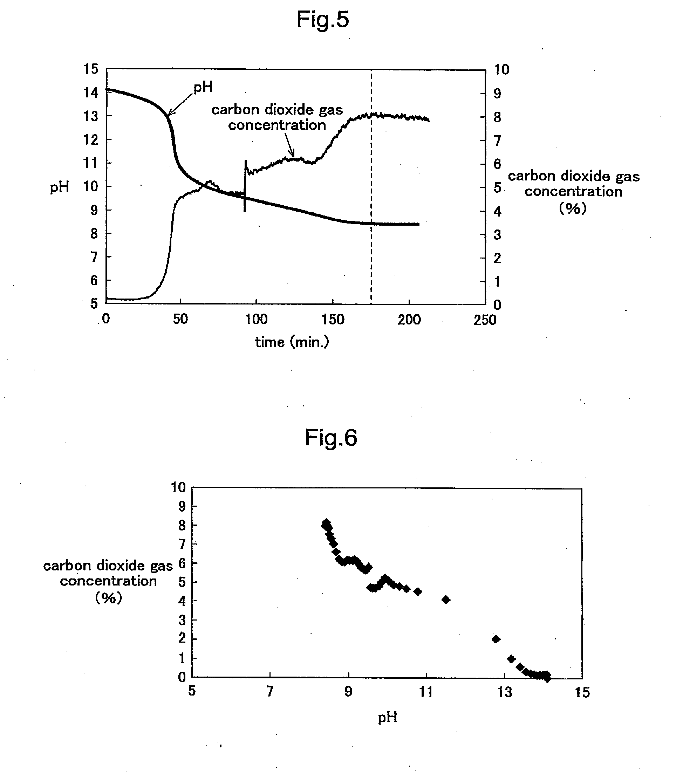

Then, the change over time of the concentration of carbon dioxide gas in the gas derived form the solution above is determined by e.g. a CO₂ gas analyzer (testo350S manufactured by TESTO (Co. Ltd.)) and the change of pH of the solution is determined also. Then, the respective measured values are plotted in a graph as shown in Fig. 5. From the graph thus produced, pH values and carbon dioxide gas concentrations at same timings are read, whereby the graph such as the one shown in Fig. 6 can be made. In this, the carbon dioxide gas absorptivity can be obtained by (10-carbon dioxide gas concentration) /10 since the concentration of the carbon dioxide gas introduced is 10%. Hence, the graph of pH-carbon dioxide gas absorptivity is produced from the graph shown in Fig. 6 and logarithmic approximation of the plotted data is effected, whereby there can be obtained: carbon dioxide gas absorptivity = 1.46 Ln(pH) - 2.87, that is, ph=EXP [(carbon dioxide gas absorptivity + 2.87)/1.4].

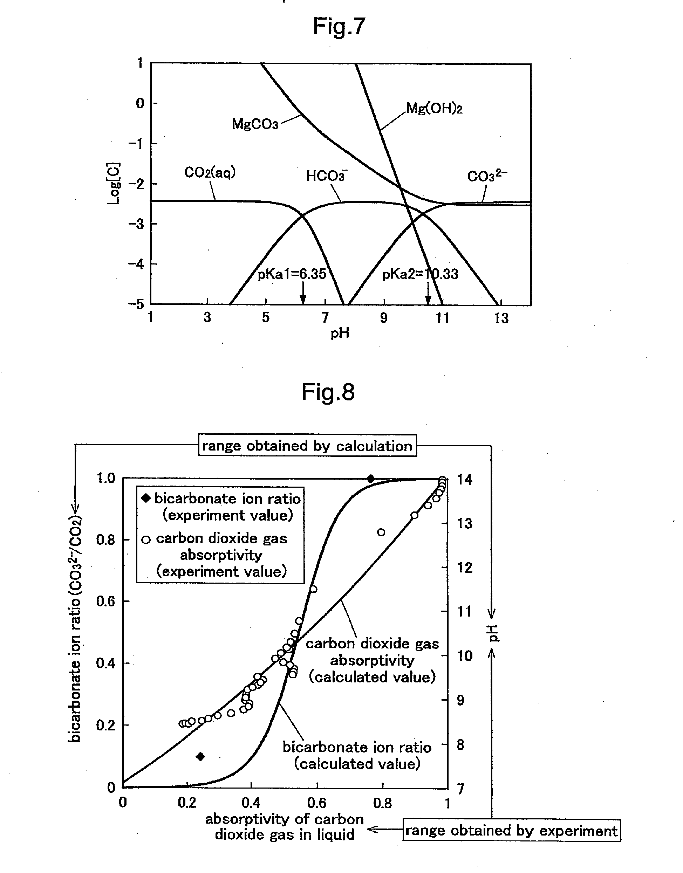

On the other hand, the relationship between pH and the bicarbonate ion ratio can be calculated from the primary discrete constant (Ka1) and the secondary discrete constant (Ka2) of carbon dioxide. Therefore, the relationship between pH and bicarbonate ion ratio can be obtained from literature data such as those shown in Fig. 7 and the formula: Ka1Ka2/(Ka1Ka2+Ka1 [H⁺] + [H⁺]²).

From the foregoing, there is established a relationship among the bicarbonate ion ratio, pH and carbon dioxide gas absorptivity. Hence, the relationship between carbon dioxide gas absorptivity and bicarbonate ion ratio can be plotted in the graph as shown in Fig. 8. Therefore, under the condition of a fixed flow rate of carbon dioxide gas, the bicarbonate ion concentration can be calculated with using the relationship between the carbon dioxide concentration - bicarbonate ion ratio as shown in Fig. 8. In Fig. 8, if the experiment result of the bicarbonate ion ratios is plotted as experimental values, it can be recognized that these values are in good agreement with the calculated values.

The magnesium carbonate produced by the present invention can be collected by any known method such as filtration. Magnesium carbonate thus collected can be used directly in e.g. charging material for such industry as the paper making, pigment, paint, plastics, rubber, textile, etc. Also, the filtrate can be reused in carbon dioxide gas processing. Therefore, the processing cost of the carbon dioxide gas processing as a whole can be reduced.

### Examples

Next, the present invention will be described in greater details by showing examples using the present invention. It is understood, however, that the present invention is not limited to these examples.

### (Example 1)

Processing of carbon dioxide gas was carried out with using a carbon dioxide gas processing apparatus according to the present embodiment shown in Fig. 1. That is, 500 ml of water was introduced to the carbonate production tank 1 and while stirring was being effected at 400 rpm with using the stirrer 2, a predetermined amount of magnesium oxide (MgO) which was produced in advance in the oxidization vessel 5 was charged so that [Mg²⁺] may become 0.05 mol/L. And, with using the nozzle 4, 100% carbon dioxide gas (CO₂) was introduced into water by bubbling at the flow rate of 1 liter/min. Whitish suspension was observed in the water in the carbonate production tank 1 at the beginning of the introduction, but the water became transparent upon lapse of a predetermined period.

Next, sodium carbonate (Na₂CO₃) was charged into the carbonate production tank 1 so that [CO₃²⁻] may become 0.005 mol/L. Then, the resultant solution of the carbonate production tank 1 was heated in the bath tank 3 thereby to dissolve the sodium carbonate completely. Incidentally, sodium carbonate was used for the purpose of concentration adjustment of carbonate ion (CO₃²⁻).

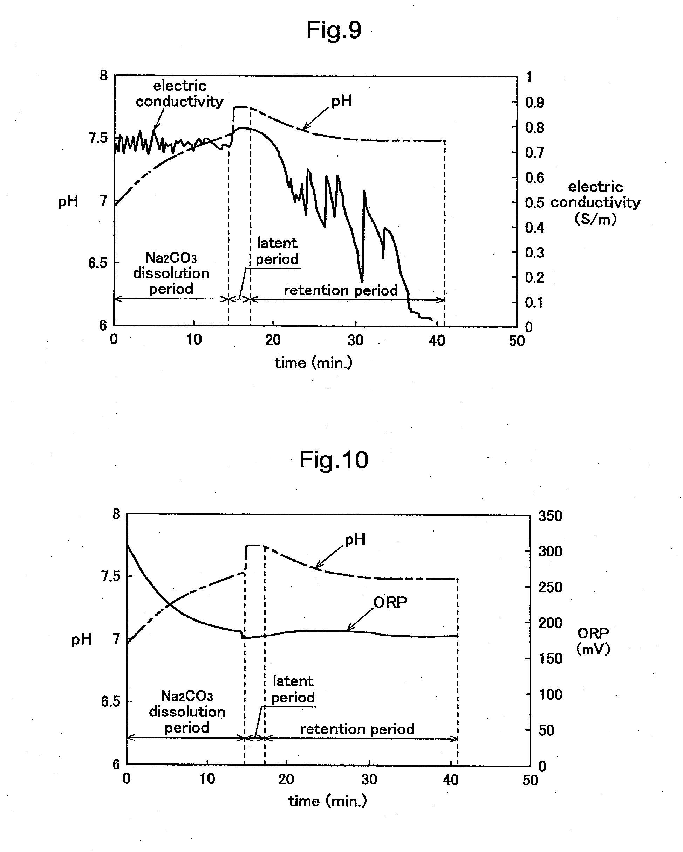

After lapse of a predetermined period, precipitation of product material began. Determinations of pH, electric conductivity and ORP (Ag/AgCl electrodes) were made on the solution at this timing. Then, change over times thereof are shown in Figs. 9 and 10. Until completion dissolution of sodium carbonate, pH value rose and ORP value dropped, and no change was observed in the electric conductivity. The probable reason for this is that decarbonation (CO₃² → CO₂ (g) + 2OH⁻) from the solution occurred. As more CO₂ is removed from the solution, more OH⁻ is discharged, thus pH becoming higher and ORP becoming lower. Also, as to the bicarbonate ion, it is believed that a reaction thereof to hydrogen carbonate ion (CO₃²⁻→HCO₃⁻+ e⁻) too was occurring. When pH is between neutral and weakly acidic, the bicarbonate ion ratio is low as shown in Fig. 8, so that there occurs change into hydrogen carbonate ion and electrons are discharged, so that ORP values are lower.

During the latent period until magnesium carbonate precipitation, two reactions: production of magnesium carbonate (Mg²⁺ + CO₃²⁻ →MgCO₃) and reaction to hydrogen carbonate ion (CO₃²⁻ + H₂O →HCO₃⁻ + OH⁻) can occur. Since pH in this period is constant, it may be understood that the bicarbonate ions are consumed in the reaction with the magnesium ions and hardly consumed in the reaction to hydrogen carbonate ions. That is, the period until production of magnesium carbonate is the latent period.

In the retention period subsequent to start of magnesium carbonate precipitation, in the hydrogen carbonate ions, the reaction to the bicarbonate ions becomes prevalent. Although pH and ORP values hardly vary under this condition, the electric conductivity becomes smaller. The probable reason for this is occurrence of reaction with OH⁻ or electrons not involved therein. It is expected that the range of pH is the boundary between natural magnesium carbonate and basic magnesium carbonate, and it is believed that natural magnesium carbonate is substituted to basic magnesium carbonate. Namely, the retention period is the period when natural magnesium carbonate precipitated initially agglutinates and as the number of its solids in the solution decreases, the electric conductivity becomes lower and then the agglutinated natural magnesium carbonate progressively changes into basic magnesium carbonate.

### (Example 2)

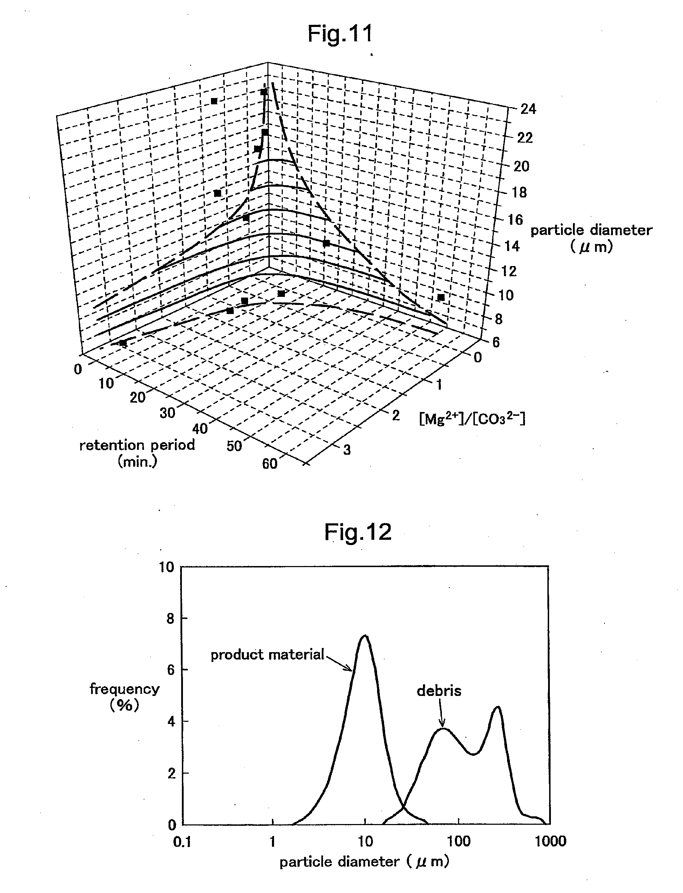

In Example 1 above, changes were studied in the latent periods until precipitation of magnesium carbonate and the particle diameters of magnesium carbonate when the magnesium ion concentration and the bicarbonate ion concentration in the solution were varied. As a result, as shown in Fig. 11, it was found that with adjustment of the magnesium ion concentration/bicarbonate ion concentration, the latent period until precipitation of magnesium carbonate and the particle diameters of the magnesium carbonate can be controlled. Therefore, the magnesium carbonate and debris present in a mixed state in the solution can be separated from each other easily.

### (Example 3)

The particle size distribution of precipitates obtained in Example 2 was determined. As a result, as shown in Fig. 12, it was found that the particle diameters of magnesium carbonate and the particle diameters of the other debris differ widely, so that they can be easily separated from each other.

### (Example 4)

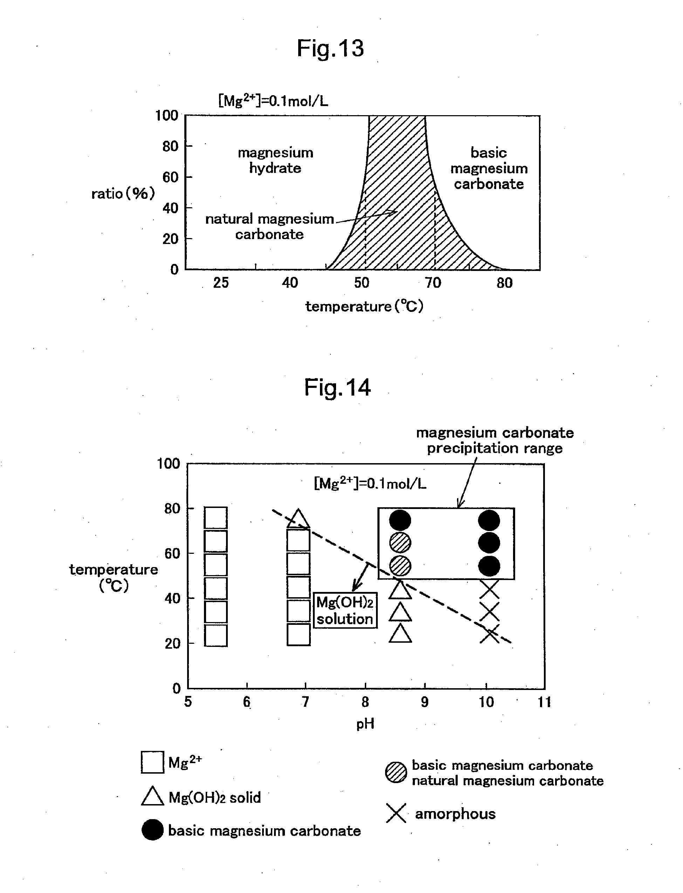

With using the carbon dioxide gas processing apparatus shown in Fig. 1, water and magnesium hydrate were charged into the carbonate production tank 1 so that [Mg²⁺] may become 0.1 mol/L. And, the resultant solution was stirred at from 300 to 400 rpm with using the stirrer 2 and heated when necessary, in the course of which 90% N₂-10% CO₂ gas was introduced for a predetermined period at the rate of 5 L/min. Thereafter, the solution was retained for 30 minutes and then filtered and dried, after which the product materials were identified by the X-ray diffraction technique and subject to quantitative analysis. As a result, as shown in Fig. 13, it was confirmed that the kinds of product materials produced were different depending on the temperatures of the solution. Under this condition, for selective production of natural magnesium carbonate, the temperature of the solution is to be set from 50 to 70°C, preferably.

### (Example 5)

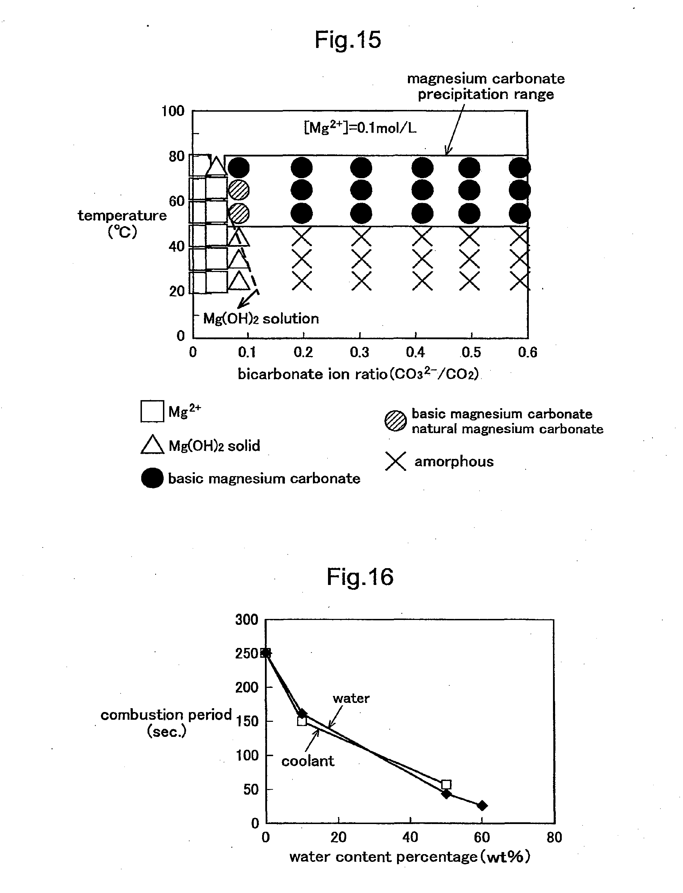

MgO was introduced to 500 ml of water so that [Mg²⁺] may become 0.1 mol/L and the solution with a predetermined initial pH was heated, when precipitates were studied. As a result, it was found that magnesium carbonate precipitates in a range shown in Fig. 14. Further, with conversion of this graph by pH-bicarbonate ion ratio in Fig. 8, there was obtained the relationship between the bicarbonate ion ratio and the temperature as shown in Fig. 15.

### [Other Embodiments]

As the gas containing oxygen as a constituent element thereof, air, oxygen, or the like can also be employed. For instance, by igniting the Mg powder with continuous supply of air, oxygen or the like thereto, the Mg powder can be combusted.

In this case, preferably, as the Mg powder, Mg powder containing water or water soluble coolant is employed. That is, at the time of combustion, if water is present in the Mg powder, there occurs a reaction which generates hydrogen and this hydrogen combusts violently. Therefore, the combustion of the Mg powder can be accelerated. Incidentally, if an excess amount of water is adhered, this deteriorates ignition performance, so that there is the risk of the combustion not proceeding stably.

As a combustion experiment of the Mg powder, a predetermined amount of water or coolant was mixed into Mg powder which had been washed well with warm water and dried at 100°C for 90 minutes, and the resultant powder was ignited with using a gas burner, then, the possibility/impossibility of ignition and combustion periods were studied when the content percentage of water or coolant in the Mg powder was varied. Incidentally, each sample was arranged on a metal mesh (#12) in a sponge frame: 50 mm x 50 mm x 10 mm, such that its apparent bulk density may be constant. As a result, the Mg powder was ignited in case the content percentage of water was 50 wt% or lower and the content percentage of the coolant was 60 wt% or lower, and the powder was not ignited when the content percentages were higher. On the other hand, as to the combustion period, as shown in Fig. 16, it was found that the higher the content percentage of water or coolant, in the shorter the period complete combustion occurred.

In order to check the relationship between the combustion temperature and the magnesium compound produced thereby, the Mg powder was ignited for combustion under the three differing conditions as follows, and the combustion temperatures and the product materials after combustion were studied. The combustion temperatures were determined by a thermocouple and the product materials were identified by the X-ray diffraction determination.
Condition 1: Dry Mg powder is combusted on a ceramics dish having a large thermal capacity.
Condition 2: Dry Mg powder is combusted on a punching metal (#120).
Condition 3: Mg powder containing 50 wt% of coolant is combusted on a punching metal (#120).

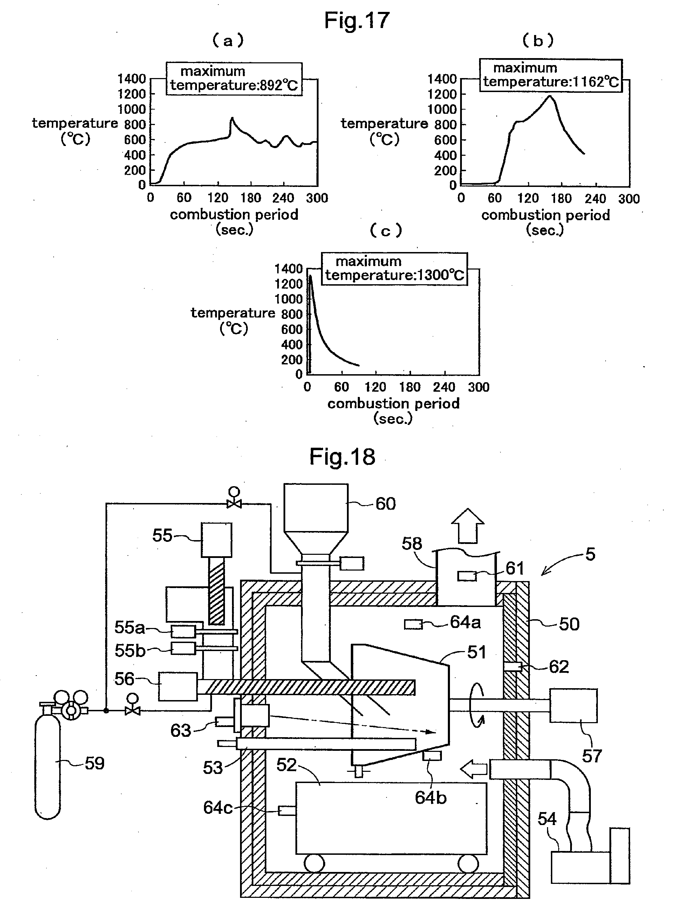

As a result, as shown in Fig. 17, the highest reached temperatures under Conditions 1, 2 and 3 were 892°C, 1162°C and 1300°C, respectively. Further, as to the product materials from the respective combustions, in the case the product materials under Conditions 1 and 2, the surfaces thereof were oxides, but the insides thereof were nitride or carbide; whereas, the product material under Condition 3 was formed solely of oxide.

Therefore, it is understood that when Mg powder containing coolant is combusted with continuous and sufficient supply of oxygen to the entire powder, the maximum reached temperature can be 1300°C or higher, so that magnesium oxide can be produced in an efficient manner.

As the oxidization vessel 5, a combustion vessel such as one shown in Fig. 18 can be employed also. Such oxidization vessel 5 is mounted inside a vessel body 50, with the axis thereof oriented horizontal. The vessel 5 includes a cylindrical body 51 rotatable with holding the Mg powder and combusting this Mg powder therein and having a tapered lateral face, and a collection portion 52 for collecting magnesium oxide or the like which is produced by the combustion inside the cylindrical body 51 and slips off the tapering of the lateral face. The oxidization vessel 5 further includes an ignition source 53 for igniting the Mg powder held within the cylindrical body 51, a blower 54 for supplying air or the like to the inside of the vessel body 50, a hopper 55 for storing the Mg powder, and a conveyer 56 for conveying the Mg powder from the hopper 55 to the cylindrical body 51. Further, the hopper 55 includes two shutters 55a, 55b having different opening/closing timings from each other. With this, it is possible to prevent the Mg powder when supplied from catching fire by backfire and being continuously combusted until it reaches the hopper 55 and it is possible at the same time to prevent continuous combustion on the conveyer 56 also by intermittent supplying of the Mg powder. Incidentally, with this oxidization vessel 5, once the Mg powder has been ignited, as the Mg powder is continuously fed to the cylindrical body 51 by the conveyer 56, the Mg powder is self-ignited, so there is no need for ignition for each feeding of the Mg powder. For this reason, the ignition source 53 is configured to be removable from the vessel body 50 after ignition. Also, the blower 54 supplies air at the rate of e.g. 50Umin or less.

The cylindrical body 51 is operably connected to a drive motor 57 to be rotatable thereby. In operation, as the cylindrical body 51 is rotated, it is possible to cause the Mg powder held therein to gradually fall into the collection portion 52, with the powder being oxidized in the course of this at the same time. The cylindrical body 51 is rotated at a rotational speed of 5 rpm or higher, for example. Also, the cylindrical body 51 is formed of a porous member such as a punching metal or a meshed metal plate or the like, having a porosity from 20 to 50%, so that the Mg powder held within the cylindrical body 51 entirely may come into contact with air supplied to the inside of the vessel body 50 thereby to maintain the combustion temperature high. The size of each pore of the cylindrical body 51 is not particularly limited, as long as it does not allow inadvertent dropping of Mg power through the pore. Preferably, the pore diameter is set to 1 mm or less. Further, for the cylindrical body 51, preferably, the tapering angle is set from 15 to 45 degrees, and the maximum diameter is set to be 100 mm or greater.

When Mg powder containing water or coolant is combusted, hydrogen may sometimes be generated in association with the combustion. And, when this leads to abnormal ignition, there is the danger of explosion or the like. For this reason, the vessel body 50 includes a gas drainage hole 58 connected to a duct or the like and capable of discharging generated hydrogen to the outside of the oxidization vessel 50. The oxidization vessel 5 further includes an inactive gas supply source 59 for supplying inactive gas such as helium, argon or the like to the inside of the vessel body 50 for restricting combustion, and a quenching hopper 60 configured to drop an amount of fireproof sand to the combustion section inside the cylindrical body 51 thereby quenching. And, in the vessel body 50, there are provided a hydrogen detector 61, a pressure sensor 62, a flame detector 63, a temperature sensor 64a, etc. and in the cylindrical body 51, a temperature cylinder 64b etc. is provided and in the collection portion 52, a temperature sensor 64c etc is provided. In operation, when abnormality is detected by these sensors or the like, the inactive gas is supplied into the vessel body 50 or the fireproof sand is dropped therein. Incidentally, the supplying of the inactive gas and dropping of the fireproof sand can be effected simultaneously. Instead, the supplying of the inactive gas and dropping of the fireproof sand can be effected stepwise one after another, in accordance with the degree of abnormality. In the latter case, if combustion can be restricted and the temperature inside the vessel body 50 can be reduced by the supplying of inactive gas alone, the need for dropping the fireproof sand will be eliminated.

With the oxidization vessel 5 described above, the combustion temperature can be maintained high and the Mg powder can be combusted continuously. In particular, in the case of using Mg powder containing water or coolant as the Mg powder, the combustion temperature can be maintained at 1300°C or higher. Therefore, it is possible to prevent generation of magnesium nitride which could be produced together with magnesium oxide in the case of combustion temperature of 1300°C or lower, so that magnesium oxide can be produced selectively in an efficient manner.

### Industrial Applicability

The present invention can be applied to processing of carbon dioxide gas such as combustion exhaust gas or the like.

### Reference Signs List

- 1: carbonate production tank
- 4: nozzle (carbon dioxide gas supplying means)
- 5: oxidization vessel

## Claims

1. A carbon dioxide gas processing method comprising the steps of:
oxidizing magnesium-containing powder in an atmosphere of a gas containing oxygen as a constituent element thereof, thereby to produce a magnesium oxide;
adding the produced magnesium oxide to water or a water solution; and
bringing carbon dioxide gas into contact with said water or said water solution, thereby to immobilize the carbon dioxide gas as magnesium carbonate.

2. The carbon dioxide gas processing method according to claim 1, wherein at least one of the temperature, the magnesium ion concentration and the bicarbonate ion concentration of the water or the water solution is controlled to precipitate the magnesium carbonate.

## Patentansprüche

1. Kohlendioxidgasprozessierungsverfahren umfassend die Schritte:
Oxidieren von magnesiumhaltigem Pulver in einer Atmosphäre eines Gases, das Sauerstoff als ein konstituierendes Element davon enthält, um dadurch ein Magnesiumoxid herzustellen;
Zugeben des hergestellten Magnesiumoxids zu Wasser oder einer Wasserlösung; und
in Kontakt bringen von Kohlendioxidgas mit dem Wasser oder der Wasserlösung, um dadurch das Kohlendioxidgas als Magnesiumcarbonat zu immobilisieren.

2. Kohlendioxidgasprozessierungsverfahren nach Anspruch 1, wobei wenigstens eines aus der Temperatur, der Magnesiumionenkonzentration und der Bicarbonationenkonzentration des Wassers oder der Wasserlösung gesteuert wird, um das Magnesiumcarbonat auszufällen.

## Revendications

1. Procédé de traitement de gaz de dioxyde de carbone comprenant les étapes :
d'oxydation d'une poudre contenant du magnésium dans une atmosphère d'un gaz contenant de l'oxygène comme un élément constituant de celle-ci, pour produire par-là un oxyde de magnésium ;
d'addition de l'oxyde de magnésium produit à de l'eau ou à une solution d'eau ; et
de mise en contact de gaz de dioxyde de carbone avec ladite eau ou ladite solution d'eau, pour immobiliser par-là le gaz de dioxyde de carbone comme carbonate de magnésium.

2. Procédé de traitement de gaz de dioxyde de carbone selon la revendication 1, dans lequel au moins une parmi la température, la concentration en ion magnésium et la concentration en ion bicarbonate de l'eau ou de la solution d'eau est contrôlée pour faire précipiter le carbonate de magnésium.
